# EUROPÄISCHE PATENTANMELDUNG

(11) **EP 3 556 690 A1**
(43) Veröffentlichungstag der Anmeldung: **23.10.2019**
(21) Anmeldenummer: 18168333.5
(22) Anmeldetag: 19.04.2018
(51) Int. Cl.: B65G 15/34, B65G 43/02

(54) **ENDLOS GEWEBTES UND VERBINDUNGSLOS GEFERTIGTES BAND**

(71) Anmelder: "Thuringia" Transportbandfabrik Heinz Wilke OHG, 47805 Krefeld (DE)
(72) Erfinder: Wilke, Marco, 47805 Krefeld (DE)
(74) Vertreter: Dr. Stark & Partner Patentanwälte mbB

(57) **Zusammenfassung**

Die Erfindung betrifft ein endlos gewebtes und verbindungslos gefertigtes Band, beispielsweise in Form eines Transportbandes, eines Abzugsriemens oder eines Haspelgurtes, wobei das Band eine Innenfläche, eine Außenfläche sowie zwei seitliche Kanten umfasst und aus einem technischen Gewebe mit längs verlaufenden Kettfäden und quer verlaufenden Schussfäden ausgebildet ist, wobei zumindest die Außenfläche mit einer bei Raumtemperatur flexiblen Beschichtung versehen ist.

Um eine Möglichkeit zu schaffen, die Temperatur eines solchen Bandes im laufenden Betrieb zu bestimmen, soll in das technische Gewebe ein RFID-Chip mit einem Temperatursensor eingearbeitet sein, wobei der RFID-Chip mit einer Ummantelung aus einem thermisch isolierenden Material umgeben ist, wobei dieses Material für derartige elektromagnetische Wellen, welche für die Auslesung des RFID-Chips geeignet sind, durchlässig ist, und wobei diese Ummantelung (mit dem darin befindlichen RFID-Chip) in der Art eines Schussfadens in das Gewebe verwoben ist. Die Ummantelung mit dem darin befindlichen RFID-Chip bildet somit an dieser Stelle des Bandes quasi einen extra breiten Schussfaden.

## Beschreibung

Die Erfindung betrifft ein endlos gewebtes und verbindungslos gefertigtes Band, beispielsweise in Form eines Transportbandes, eines Abzugsriemens oder eines Haspelgurtes, wobei das Band eine Innenfläche, eine Außenfläche sowie zwei seitliche Kanten umfasst und aus einem technischen Gewebe mit längs verlaufenden Kettfäden und quer verlaufenden Schussfäden ausgebildet ist, wobei zumindest die Außenfläche mit einer bei Raumtemperatur flexiblen Beschichtung versehen ist.

Als technische Textilien werden im technischen Sprachgebrauch üblicherweise alle textilen Materialien bezeichnet, die vorrangig in Hinsicht ihrer technischen und funktionellen Eigenschaften und nicht wegen ihres ästhetischen und dekorativen Charakters hergestellt werden. Dies können beispielsweise linienförmige textile Gebilde wie z. B. Cord oder aber textile Flächengebilde wie z. B. Gewebe, Gestricke, Gewirke, Vliesstoffe, Filze, sein.

Aus der Praxis sind derartige Bänder in vielerlei Ausführungen bekannt.

Nachteilig bei solchen Bändern ist, dass die Hitzebelastbarkeit begrenzt ist. Insoweit soll eine Möglichkeit geschaffen werden, die Temperatur des Bandes im laufenden Betrieb zu bestimmen.

Diese Aufgabe wird bei einem gattungsgemäßen Band dadurch gelöst, dass in das Band wenigstens ein RFID-Chip, vorzugsweise ein zur Temperaturerfassung, zur Identifikation und/oder zur Geschwindigkeits- und/oder Fortschrittsmessung und/oder Bewegungserfassung und/oder zur Druckmessung geeigneter RFID-Chip, eingearbeitet ist. Somit können die Zustände des Bandes berührungslos erfasst werden. Auch kann der RFID-Chip als Rundenzähler oder zur genauen Identifikation des Bandes dienen, um somit das richtige Band für einen beabsichtigten Einsatzzweck zu identifizieren. Entsprechende Kennwerte oder lediglich eine Identifikationskennzeichnung können insoweit auf dem RFID-Chip hinterlegt sein. Falls erforderlich, kann der RFID-Chip insoweit jeweils mit einem für die Erfassung des jeweiligen Kennwertes geeigneten Sensor, beispielsweise einem Temperatursensor, einem Drucksensor etc., versehen sein.

Mit RFID (Abkürzung der englischen Angabe "radio-frequency identification" ("Identifizierung mit Hilfe elektromagnetischer Wellen") wird eine Technologie für Sender-Empfänger-Systeme zum automatischen und berührungslosen Identifizieren und Lokalisieren beispielsweise von Objekten mit Radiowellen bezeichnet. Ein entsprechendes RFID-System besteht dabei zum einem aus einem einen kennzeichnenden Code enthaltenden Transponder, der umgangssprachlich auch als RFID-Chip bezeichnet wird und sich am oder im Gegenstand befindet und zum anderen aus einem Lesegerät zum Auslesen dieser Kennung.

RFID-Chips können über ein spezielles Druckverfahren als stabile Schaltungen aus Polymeren hergestellt werden. Die Kopplung geschieht durch vom Lesegerät erzeugte magnetische Wechselfelder in geringer Reichweite oder durch hochfrequente Radiowellen. Damit werden nicht nur Daten übertragen, sondern auch der Transponder mit Energie versorgt. Insoweit kann kontaktlos die Temperatur des Bandes, und zwar im Inneren des Bandes, von außerhalb des Bandes im laufenden Betrieb abgefragt werden.

Vorzugsweise kann zumindest ein RFID-Chip mit einer Ummantelung aus einem thermisch isolierenden Material umgeben sein, wobei dieses Material für derartige elektromagnetische Wellen, welche für die Auslesung des RFID-Chips geeignet sind, durchlässig ist.

Erfindungsgemäß kann zumindest ein RFID-Chip in die Beschichtung eingearbeitet sein.

Auch kann zumindest ein RFID-Chip in das technische Gewebe eingearbeitet sein, wobei der RFID-Chip und ggf. auch dessen Ummantelung (mit dem darin befindlichen RFID-Chip) in der Art eines Schussfadens in das Gewebe verwoben ist. Die Ummantelung mit dem darin befindlichen RFID-Chip bildet somit an dieser Stelle des Bandes quasi einen extra breiten Schussfaden.

Dabei kann der RFID-Chip derart in die Ummantelung eingebettet sein, dass keine Stelle des RFID-Chips in direktem Kontakt mit dem technischen Gewebe und/oder der Beschichtung ist. Damit ist der RFID-Chip rundum gut geschützt und thermisch isoliert.

Vorzugsweise kann die Beschichtung Kunststoffe wie PVC und/oder SilikonKautschuk und/oder thermoplastisches Urethan und/oder Polyurethan umfassen, vorzugsweise nur aus zumindest einem dieser Materialien bestehen. Dabei sind die hier in Frage kommenden thermoplastischen Kunststoffe zwar fest, jedoch nicht starr oder steif, und sie sind auch im festen Zustand flexibel.

Vorteilhafterweise kann die Beschichtung Gummi und/oder Naturkautschuk und/oder eine Gummi-Art umfassen, vorzugsweise nur aus zumindest einem dieser Materialien bestehen. Dabei sind die hier in Frage kommenden Materialien zwar fest, jedoch nicht starr oder steif, und sie sind auch im festen Zustand flexibel.

Erfindungsgemäß kann das technische Gewebe Kunstfasern wie Polyester und/oder Aramid umfassen, vorzugsweise nur aus Kunstfasern aus zumindest einem dieser Materialien bestehen. Dabei sind die hier in Frage kommenden Materialien zwar fest, jedoch nicht starr oder steif, und sie sind auch im festen Zustand flexibel.

Vorteilhafterweise kann das technische Gewebe Naturfasern, beispielsweise aus Baumwolle, umfassen, vorzugsweise nur aus Kunstfasern aus zumindest einem dieser Materialien bestehen. Dabei sind die hier in Frage kommenden Materialien zwar fest, jedoch nicht starr oder steif, und sie sind auch im festen Zustand flexibel. Auch sind metallische Bestandteile möglich.

Bei einem bevorzugten Ausführungsbeispiel der Erfindung kann die Ummantelung aus einem Gewebe, vorzugsweise aus einem Glasfaser-Schlauchgewebe, bestehen, welches sowohl gute mechanische als auch hitzeisolierende Eigenschaften aufweist.

Erfindungsgemäß kann die Ummantelung eine thermische Beständigkeit von kurzfristig bis zu 300°C und/oder langfristig bis 200°C aufweisen. Unter kurzfristig wird vorliegend ein Zeitraum von weniger als einer Minute, wenigstens jedoch ca. sieben bis zehn Sekunden, verstanden. Unter langfristig ist wenigstens eine Belastbarkeit von mehreren Stunden, vorzugsweise zumindest für den Schichtbetrieb (acht Stunden) oder aber sogar dauerhaft, zu verstehen.

Vorzugsweise kann die Ummantelung zumindest außenseitig mit einem Haftvermittler zur Verbesserung der Haftung zwischen der Ummantelung einerseits und der Beschichtung andererseits versehen sein, so dass die Beschichtung besser an der Ummantelung haftet und somit ein homogener Verbund gegeben ist.

Auch können die seitlichen Kanten des Bandes verschweißt, bevorzugt heißluftverschweißt, und/oder plastifiziert sein.

Bei einem bevorzugten Ausführungsbeispiel der Erfindung kann die Beschichtung mehrere nacheinander aufgebrachte Schichten umfassen, so dass eine entsprechende Beschichtungsstärke durch Aufbringen mehrerer Schichten nacheinander erstellt worden sein kann.

Dabei können mehrere und oder sogar sämtliche Schichten aus einem einheitlichen Material bestehen. Auch können Beschichtungen unterschiedlicher Teilbereiche aus unterschiedlichen Materialen und/oder unterschiedlichen Beschichtungskombinationen gebildet sein. Beispielsweise kann die außenseitige Schicht eines Bandes aus einem anderen Material sein und einen anderen Schichtaufbau aufweisen als die innenseitige Beschichtung des Bandes.

Erfindungsgemäß kann das Material der ersten aufgebrachten Schicht, welche in Kontakt mit dem technischen Gewebe ist, mit einem Haftvermittler zur Verbesserung der Haftung zwischen der Ummantelung und/oder dem technischen Gewebe einerseits und der Beschichtung andererseits versehen sein.

Dabei kann der Haftvermittler Isocyanat, vorzugsweise oligomeres Isocyanat, beinhalten, welches die so genannte Reaktivkomponente des Haftvermittlers sein kann.

Auch kann der Haftvermittler einen Weichmacher beinhalten, der mengenmäßiger Hauptbestandteil des Haftvermittlers sein kann.

## Patentansprüche

1. Endlos gewebtes und verbindungslos gefertigtes Band, beispielsweise in Form eines Transportbandes, eines Abzugsriemens oder eines Haspelgurtes, wobei das Band eine Innenfläche, eine Außenfläche sowie zwei seitliche Kanten umfasst und aus einem technischen Gewebe mit längs verlaufenden Kettfäden und quer verlaufenden Schussfäden ausgebildet ist, wobei zumindest die Außenfläche mit einer bei Raumtemperatur flexiblen Beschichtung versehen ist, **dadurch gekennzeichnet, dass** in das Band wenigstens ein RFID-Chip, vorzugsweise ein zur Temperaturerfassung, zur Identifikation und/oder zur Geschwindigkeits- und/oder Fortschrittsmessung und/oder Bewegungserfassung und/oder zur Druckmessung geeigneter RFID-Chip, eingearbeitet ist.

2. Band nach dem vorhergehenden Anspruch, **dadurch gekennzeichnet, dass** zumindest ein RFID-Chip mit einer Ummantelung aus einem thermisch isolierenden Material umgeben ist, wobei dieses Material für derartige elektromagnetische Wellen, welche für die Auslesung des RFID-Chips geeignet sind, durchlässig ist.

3. Band nach einem der vorhergehenden Ansprüche, **dadurch gekennzeichnet, dass** zumindest ein RFID-Chip in die Beschichtung eingearbeitet ist.

4. Band nach einem der vorhergehenden Ansprüche, **dadurch gekennzeichnet, dass** zumindest ein RFID-Chip in das technische Gewebe eingearbeitet ist, wobei der RFID-Chip und ggf. auch dessen Ummantelung in der Art eines Schussfadens in das Gewebe verwoben ist.

5. Band nach dem vorhergehenden Anspruch, **dadurch gekennzeichnet, dass** der RFID-Chip derart in die Ummantelung eingebettet ist, dass keine Stelle des RFID-Chips in direktem Kontakt mit dem technischen Gewebe und/oder der Beschichtung ist.

6. Band nach einem der vorhergehenden Ansprüche, **dadurch gekennzeichnet, dass** die Beschichtung Kunststoffe wie PVC und/oder SilikonKautschuk und/oder thermoplastisches Urethan und/oder Polyurethan umfasst, vorzugsweise nur aus zumindest einem dieser Materialien besteht.

7. Band nach einem der vorhergehenden Ansprüche, **dadurch gekennzeichnet, dass** die Beschichtung Gummi und/oder Naturkautschuk und/oder eine Gummi-Art umfasst, vorzugsweise nur aus zumindest einem dieser Materialien besteht.

8. Band nach einem der vorhergehenden Ansprüche, **dadurch gekennzeichnet, dass** das technische Gewebe Kunstfasern wie Polyester und/oder Aramid umfasst, vorzugsweise nur aus Kunstfasern aus zumindest einem dieser Materialien besteht.

9. Band nach einem der vorhergehenden Ansprüche, **dadurch gekennzeichnet, dass** das technische Gewebe Naturfasern, beispielsweise aus Baumwolle, umfasst, vorzugsweise nur aus Kunstfasern aus zumindest einem dieser Materialien besteht.

10. Band nach einem der vorhergehenden Ansprüche, **dadurch gekennzeichnet, dass** die Ummantelung aus einem Gewebe, vorzugsweise aus einem Glasfaser-Schlauchgewebe, besteht.

11. Band nach einem der vorhergehenden Ansprüche, **dadurch gekennzeichnet, dass** die Ummantelung eine thermische Beständigkeit von kurzfristig bis zu 300°C und/oder langfristig bis 200°C aufweist.

12. Band nach einem der vorhergehenden Ansprüche, **dadurch gekennzeichnet, dass** die Ummantelung zumindest außenseitig mit einem Haftvermittler zur Verbesserung der Haftung zwischen der Ummantelung einerseits und der Beschichtung andererseits versehen ist.

13. Band nach einem der vorhergehenden Ansprüche, **dadurch gekennzeichnet, dass** die seitlichen Kanten des Bandes verschweißt, bevorzugt heißluftverschweißt, und/oder plastifiziert sind.

14. Band nach einem der vorhergehenden Ansprüche, **dadurch gekennzeichnet, dass** die Beschichtung mehrere nacheinander aufgebrachte Schichten, vorzugsweise mehrere oder sämtlich aus einem einheitlichen Material bestehende Schichten, umfasst.

15. Band nach einem der vorhergehenden Ansprüche, **dadurch gekennzeichnet, dass** das Material der ersten aufgebrachten Schicht, welche in Kontakt mit dem technischen Gewebe ist, mit einem Haftvermittler zur Verbesserung der Haftung zwischen der Ummantelung und/oder dem technischen Gewebe einerseits und der Beschichtung andererseits versehen ist.

16. Band nach einem der vorhergehenden Ansprüche, **dadurch gekennzeichnet, dass** der Haftvermittler Isocyanat, vorzugsweise oligomeres Isocyanat, beinhaltet.

17. Band nach dem vorhergehenden Anspruch, **dadurch gekennzeichnet, dass** der Haftvermittler einen Weichmacher beinhaltet.
